# EUROPEAN PATENT APPLICATION

(11) **EP 4 644 984 A1**
(43) Date of publication of application: **05.11.2025**
(21) Application number: 23929953.0
(22) Date of filing: 14.11.2023
(51) Int. Cl.: G02F 1/1343

(54) **LIQUID CRYSTAL LENS**

(30) Priority: 24.03.2023 CN 202310294937
(71) Applicant: Nanchang Virtual Reality Research Institute Co., Ltd., Nanchang, Jiangxi 330013 (CN)
(72) Inventor: HUO, Yingdong, Nanchang, Jiangxi 330013 (CN); RONG, Yudong, Nanchang, Jiangxi 330013 (CN)
(74) Representative: Metida
(86) International application number: PCT/CN2023/131650
(87) International publication number: WO 2024/198384

(57) **Abstract**

The present invention provides a liquid crystal lens, pertaining to the technical field of liquid crystal lenses. The liquid crystal lens includes a first electrode module, liquid crystal molecules, and a second electrode module. The first electrode module includes a first electrode group, a data line group, a scanning line group, and a scanning adapter line group. The first electrode group includes M electrode regions sequentially nested. Each of the electrode regions includes N first electrodes of annular structure sequentially nested. The M electrode regions sequentially activate TFTs of the electrode region through scanning lines to enable data lines to output a target voltage to charge storage capacitors corresponding to the first electrodes. After charging is completed, the TFTs of the electrode region are deactivated through the scanning lines, continuing until the charging of the first electrodes of the last electrode region, thereby completing the writing of one frame signal.

## Description

### TECHNICAL FIELD

The present invention pertains to the technical field of lenses, and specifically relates to a liquid crystal lens.

### BACKGROUND

A liquid crystal lens (liquid crystal lens) is a technology created by utilizing the unique physical and optical properties of liquid crystal materials. Unlike traditional glass lenses, liquid crystal lenses can focus or diverge incident light based on the electric field applied to them; in particular, the focal length of liquid crystal lenses can be adjusted by changing the supply voltage. Since liquid crystal lenses does not require mechanical movements to adjust the focal length, they are more suitable than traditional glass lenses for many image acquisition technologies.

Large-aperture liquid crystal lenses in the prior art are designed with partitions, where electrodes of the same order in each partition theoretically apply the same voltage to achieve the effect of a Fresnel lens. In current liquid crystal lens designs, electrodes of the same order in each partition are connected via adapter lines and driven together. This solution can reduce the number of signal channels and lower driving complexity. However, during the actual manufacturing process of liquid crystal lenses, non-uniform effects in individual regions caused by process deviations require independent control and adjustment of the electrode voltages in those regions, necessitating independent control of each electrode to adjust the voltage to compensate for the imaging effects of non-uniform regions.

Therefore, achieving independent control and driving of each electrode to ensure the imaging effect of liquid crystal lenses while compensating for non-uniform effects caused by process deviations is of particular importance.

### SUMMARY

Based on this, the present invention provides a liquid crystal lens that achieves independent control and driving of each electrode, addresses the issue of non-uniform effects in individual regions caused by process deviations during the actual manufacturing process of the liquid crystal lens in the prior art, thereby ensuring the imaging effect of the liquid crystal lens.

The present invention provides a liquid crystal lens, including:
a first electrode module, which includes a first electrode group, a data line group, a scanning line group, and a scanning adapter line group; where the first electrode group includes M electrode regions sequentially nested along a first direction, where M ≥ 1, each of the electrode regions includes N first electrodes of annular structure sequentially nested along the first direction, and scanning lines within each of the electrode regions are arranged in an annular pattern and connected in a regular mesh manner; the data line group includes the number of data lines consistent with the number of scanning lines in each of the electrode regions, and the first electrodes of the same order in each of the electrode regions are connected to the same data line; and the scanning adapter line group includes the number of scanning adapter lines consistent with the number of electrode regions, and the scanning adapter lines are respectively connected to the scanning lines in any one of the electrode regions;
liquid crystal molecules; and
a second electrode module, where the second electrode module is located on a side of the liquid crystal molecules away from the first electrode module; where
the M electrode regions sequentially activate the TFTs of the electrode region through the scanning lines to enable the data lines to output a target voltage to charge storage capacitors corresponding to the first electrodes, and after charging is completed, the TFTs of the electrode region are deactivated through the scanning lines, continuing until the charging of the first electrodes of the last electrode region, thereby completing the writing of one frame signal, enabling the formation of a phase surface in the form of a parabolic or arbitrary freeform surface by writing appropriate signals to the electrodes.

Compared with the prior art, the beneficial effects of the present invention are: The first electrodes of the same order in each of the electrode regions are connected to the same data line. Since the electrode voltages of the same order in each of the electrode regions are the same or differ slightly due to process variations, the voltage switching magnitude of the same data line within one frame can be reduced, thereby saving driving power. In addition, the scanning lines of each of the electrode regions are arranged in an annular structure, with each scanning line connected in a regular mesh manner, so that the first electrodes of each of the electrode regions can use the same scanning signal to reduce the impedance and signal delay of the scanning lines. This achieves independent control and driving of each of the first electrodes. The scanning lines output a voltage to first activate the TFTs of the first electrode region, each of the data lines outputs a target voltage to charge the storage capacitors of the first electrodes in the first electrode region, and after charging is completed, the scanning lines change the voltage to deactivate the TFTs of the first electrode region; and then the scanning lines of the second electrode region activate the TFTs of the second electrode region to charge the storage capacitors of the first electrodes in the second electrode region, and after charging is completed, the scanning lines change the voltage to deactivate the TFTs of the second electrode region, continuing until the charging of the first electrodes of the last electrode region, thereby completing the writing of one frame signal. By writing appropriate signals to the electrodes, a phase surface in the form of a parabolic or arbitrary freeform surface is formed to compensate for non-uniform effects caused by process deviations, thereby ensuring the imaging effect of the liquid crystal lens.

Preferably, the scanning adapter lines and the data lines are arranged radially.

Preferably, the scanning lines of each of the electrode regions are formed through common-layer patterning of the same metal layer.

Preferably, two adjacent first electrodes are respectively embedded on upper and lower surfaces of a passivation layer and are isolated from each other.

Preferably, the structure of the TFT is specifically one of a top-gate structure or a bottom-gate structure; and two adjacent first electrodes are distinguished as an odd electrode and an even electrode.

Preferably, the TFT is located below the odd electrode, a common electrode and a light-shielding layer of the TFT are formed through common-layer patterning of a first metal layer, the scanning lines and a gate of the TFT are formed through common-layer patterning of a second metal layer, and a source and a drain of the TFT are formed through common-layer patterning of a third metal layer; when the TFT structure is specifically a top-gate structure, the third metal layer, the second metal layer, and the first metal layer are sequentially arranged in a direction away from the first electrode; and when the TFT structure is specifically a bottom-gate structure, the first metal layer, the third metal layer, and the second metal layer are sequentially arranged in a direction away from the first electrode.

Preferably, the TFT is located below the even electrode, a common electrode and a light-shielding layer of the TFT are formed through common-layer patterning of a first metal layer, the scanning lines and a gate of the TFT are formed through common-layer patterning of a second metal layer, and a source and a drain of the TFT are formed through common-layer patterning of a third metal layer; when the TFT structure is specifically a top-gate structure, the third metal layer, the second metal layer, and the first metal layer are sequentially arranged in a direction away from the first electrode; and when the TFT structure is specifically a bottom-gate structure, the first metal layer, the third metal layer, and the second metal layer are sequentially arranged in a direction away from the first electrode.

Preferably, a connection position between the scanning adapter line and the scanning line is located below the odd electrode, a common electrode of the TFT and the scanning adapter line are formed through common-layer patterning of a first metal layer, the scanning line is formed through common-layer patterning of a second metal layer, and a drain of the TFT is formed through common-layer patterning of a third metal layer; when the TFT structure is specifically a top-gate structure, the third metal layer, the second metal layer, and the first metal layer are sequentially arranged in a direction away from the first electrode; and when the TFT structure is specifically a bottom-gate structure, the first metal layer, the third metal layer, and the second metal layer are sequentially arranged in a direction away from the first electrode.

Preferably, a connection position between the scanning adapter line and the scanning line is located below the even electrode, a common electrode of the TFT and the scanning adapter line are formed through common-layer patterning of a first metal layer, the scanning line is formed through common-layer patterning of a second metal layer, and a drain of the TFT is formed through common-layer patterning of a third metal layer; when the TFT structure is specifically a top-gate structure, the third metal layer, the second metal layer, and the first metal layer are sequentially arranged in a direction away from the first electrode; and when the TFT structure is specifically a bottom-gate structure, the first metal layer, the third metal layer, and the second metal layer are sequentially arranged in a direction away from the first electrode.

Preferably, common electrodes corresponding to adjacent odd electrodes and even electrodes are interconnected in some regions to form a mesh structure, the common electrode is formed through common-layer patterning of a first metal layer, the scanning line is formed through common-layer patterning of a second metal layer, and a drain of the TFT is formed through common-layer patterning of a third metal layer; when the TFT structure is specifically a top-gate structure, the third metal layer, the second metal layer, and the first metal layer are sequentially arranged in a direction away from the first electrode; and when the TFT structure is specifically a bottom-gate structure, the first metal layer, the third metal layer, and the second metal layer are sequentially arranged in a direction away from the first electrode.

### BRIEF DESCRIPTION OF DRAWINGS

To more clearly illustrate the technical solutions in the embodiments of the present invention, the drawings required for the description of the embodiments or the prior art are briefly introduced below. Obviously, the drawings described below are only some embodiments of the present invention, and those of ordinary skill in the art can obtain other drawings based on these drawings without creative efforts.
FIG. 1 is a top view of a liquid crystal lens according to Embodiment 1 of the present invention;
FIG. 2 is a structural cross-sectional view of the liquid crystal lens according to Embodiment 1 of the present invention at the position marked (1) in FIG. 1;
FIG. 3 is a structural cross-sectional view of the liquid crystal lens according to Embodiment 1 of the present invention at the position marked (2) in FIG. 1;
FIG. 4 is a structural cross-sectional view of the liquid crystal lens according to Embodiment 1 of the present invention at the position marked (3) in FIG. 1;
FIG. 5 is a structural cross-sectional view of the liquid crystal lens according to Embodiment 1 of the present invention at the position marked (4) in FIG. 1;
FIG. 6 is a structural cross-sectional view of the liquid crystal lens according to Embodiment 1 of the present invention at the position marked (5) in FIG. 1;
FIG. 7 is a structural cross-sectional view of the liquid crystal lens provided in Embodiment 2 of the present invention at the position marked (1) in FIG. 1;
FIG. 8 is a structural cross-sectional view of the liquid crystal lens according to Embodiment 2 of the present invention at the position marked (2) in FIG. 1;
FIG. 9 is a structural cross-sectional view of the liquid crystal lens according to Embodiment 2 of the present invention at the position marked (3) in FIG. 1;
FIG. 10 is a structural cross-sectional view of the liquid crystal lens according to Embodiment 2 of the present invention at the position marked (4) in FIG. 1;
FIG. 11 is a structural cross-sectional view of the liquid crystal lens according to Embodiment 2 of the present invention at the position marked (5) in FIG. 1; and
FIG. 12 is a top view of a liquid crystal lens according to Embodiment 3 of the present invention.

### Description of reference signs:

10: first electrode module; 11: first electrode; 11a: odd electrode; 11b: even electrode; 12a: common electrode; 12b: light-shielding layer; 12c: gate; 12d: source; 12e: drain; 13: first metal layer; 14: second metal layer; 15: third metal layer; 16: scanning adapter line; 17: data line; 18: scanning line; 19: lower glass substrate;
20: liquid crystal molecules; 21: liquid crystal alignment layer;
30: second electrode module; 31: upper glass substrate; and 32: second electrode.

### DESCRIPTION OF EMBODIMENTS

The embodiments of the present invention are described in detail below, with examples of the embodiments illustrated in the accompanying drawings, where the same or similar reference numerals throughout indicate the same or similar elements or elements having the same or similar functions. The embodiments described below with reference to the accompanying drawings are exemplary and intended to explain the embodiments of the present invention, and should not be construed as limiting the present invention.

In addition, the terms "first" and "second" are used for descriptive purposes only and should not be construed as indicating or implying relative importance or implicitly indicating the number of technical features indicated. Thus, a feature defined with "first" or "second" may explicitly or implicitly include one or more of such features. In the description of the embodiments of the present invention, "multiple" means two or more, unless otherwise explicitly and specifically defined.

In the embodiments of the present invention, unless otherwise explicitly specified and defined, terms such as "installed," "connected," "connection," and "fixed" should be understood broadly, for example, as fixed connections, detachable connections, or integral connections; mechanical connections or electrical connections; direct connections or indirect connections through an intermediate medium; or internal communication between two elements or the interaction relationship between two elements. For those of ordinary skill in the art, the specific meanings of the above terms in the embodiments of the present invention can be understood based on specific circumstances.

### Embodiment 1

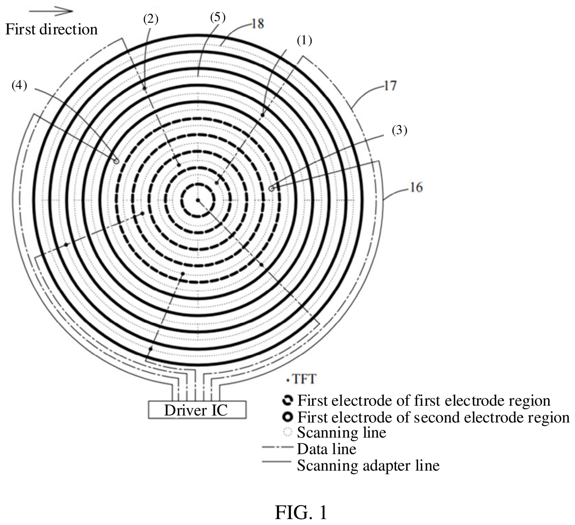

The liquid crystal lens involved in the present invention is an optical lens with functions of electrically controlled focusing and optical axis movement. Currently, liquid crystal lenses have been applied in various optical systems such as autofocus, intelligent imaging, and depth acquisition. Liquid crystal lenses with circular aperture electrodes are the most common type. However, due to the edge effects of the electric field, such liquid crystal lenses struggle to achieve a parabolic wavefront distribution close to an ideal lens under large apertures with low-voltage driving. Currently, large-aperture and low-voltage-driven liquid crystal lenses have become a research hotspot. The driving of liquid crystal lenses currently includes passive driving and active driving, where the passive driving refers to ordinary dot-matrix driving, and the active driving refers to adding an active element to each pixel. Since passive-driven liquid crystal lenses require high driving voltages and have a short lifespan, they are not suitable for large-size and high-definition displays. Therefore, large-aperture liquid crystal lenses typically adopt active driving methods. The object of study in the present invention is precisely a liquid crystal lens. The top view of the liquid crystal lens of the present invention is shown in FIG. 1.

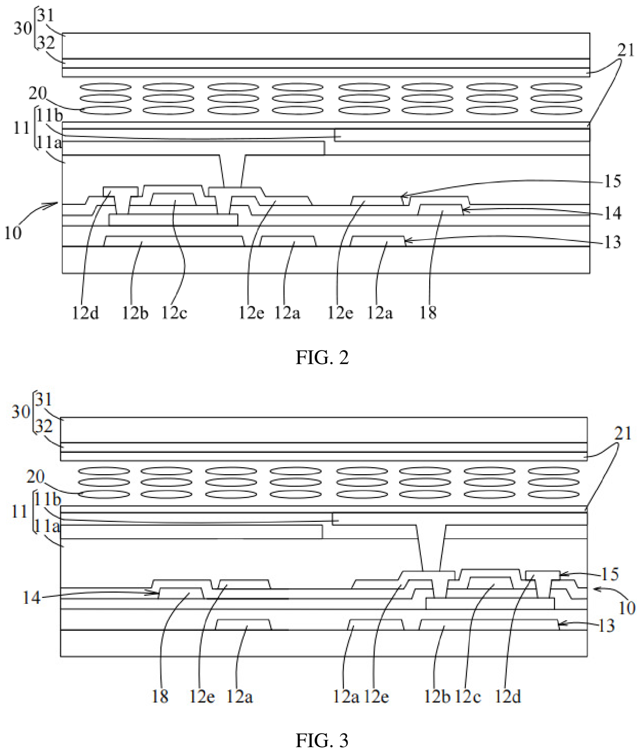

FIG. 2 is a structure of an active-driven liquid crystal lens at the position marked (1) of FIG. 1 in this embodiment. This liquid crystal lens includes a first electrode module 10, liquid crystal molecules 20, and a second electrode module 30, where the liquid crystal molecules 20 are located between the first electrode module 10 and the second electrode module 30. Specifically, surfaces of the liquid crystal molecules 20 facing the second electrode module 30 and the first electrode module 10 are respectively provided with a liquid crystal alignment layer 21. In this embodiment, the main compositions of the liquid crystal alignment layer 21 are polyimide and DMA. Of course, in other embodiments, the main compositions of the liquid crystal alignment layer may alternatively be one of the following mixtures: polyimide and NMP, or polyimide and BC. A solid-content composition of the liquid crystal alignment layer is a small-molecule compound in the original solution, which undergoes a polymerization reaction at high temperatures to form a long-chain macromolecular solid polymer, polyamide, with many branches. The angle between the branches and the main chain of the polymer molecules is the so-called pre-tilt angle of the alignment layer. The interaction force between the branch groups of the polymer and the liquid crystal molecules is relatively strong, anchoring the liquid crystal molecules and enabling the liquid crystal to align in the direction of the pre-tilt angle. In the specific manufacturing process, a layer of the liquid crystal alignment layer is coated on the mutually corresponding sides of the first electrode module and the second electrode module. After performing a rubbing or photo-alignment process on the liquid crystal alignment layer, a circle of frame-sealing adhesive is coated on the glass edge of a display region of the first electrode module, liquid crystal is dropped onto the liquid crystal alignment layer within the frame-sealing adhesive, the second electrode module and the first electrode module are aligned and bonded in a vacuum environment, and the frame-sealing adhesive is cured under ultraviolet light and heat adjustment.

As shown in FIG. 1, the first electrode module 10 of this embodiment includes a first electrode group, a data line group, a scanning line group, and a scanning adapter line group. Preferably, scanning adapter lines 16 in the scanning adapter line group and data lines 17 in the data line group are arranged radially so as to avoid line clustering that could adversely affect the visual experience during the use of the liquid crystal lens.

In this embodiment, the first electrode group includes two electrode regions sequentially nested along a first direction. It should be noted that this embodiment uses two electrode regions as an example for clarity in explaining the technical points of the present invention, while in other embodiments, the number M of electrode regions may be dozens, hundreds, or even one. Specifically, each of the electrode regions includes five first electrodes 11 of annular structure sequentially nested along the first direction (as shown by the thick dashed and solid lines in FIG. 1), and scanning lines 18 within each of the electrode regions (as shown by the dotted lines in FIG. 1) are made of a transparent material such as ITO. The scanning lines in this embodiment are arranged in an annular pattern and connected in a regular mesh manner because of their high resistivity, and the mesh structure design can reduce the impedance and signal delay of the scanning lines.

The data line group includes the number of data lines 17 (as shown by the dash-dot lines in FIG. 1) consistent with the number of scanning lines 18 in each of the electrode regions, and the first electrodes 11 of the same order in each of the electrode regions are connected to the same data line 17. For example, the first electrodes of the first order in each of the electrode regions are connected to the same data line, the purpose of which is that since the electrode voltages of the same order in each of the electrode regions are the same or differ slightly due to process variations, this can reduce the voltage switching magnitude of the same data line within one frame, thereby reducing driving power.

The scanning adapter line group includes the number of scanning adapter lines 16 (as shown by the thin solid lines in FIG. 1) consistent with the number of electrode regions, and the scanning adapter lines 16 are respectively connected to the scanning lines 18 in any one of the electrode regions. Specifically, an external driver IC outputs a voltage through the scanning adapter line connected to the first electrode region and the scanning lines within the first electrode region to first activate TFTs of the first electrode region, after which each of the data lines in the first electrode region outputs a target voltage to charge a storage capacitor of the first electrode at the corresponding position, and after charging is completed, the scanning lines in the first electrode region change the voltage to deactivate the TFTs of the first electrode region; simultaneously, the scanning lines of the second electrode region activate TFTs of the second electrode region, after which each of the data lines in the second electrode region outputs a target voltage to charge a storage capacitor of the first electrode at the corresponding position, and after charging is completed, the scanning lines in the second electrode region change the voltage to deactivate the TFTs of the second electrode region; thereby completing the writing of one frame signal, followed by the writing of the next frame signal, enabling each frame of the liquid crystal lens to output one focal length, achieving independent control and driving of each electrode. In addition, in this embodiment, by writing appropriate signals to the electrodes to form a phase surface in the form of a parabolic or arbitrary freeform surface, the adjustment of phase can address the issue of non-uniform effects in individual regions caused by process deviations during the actual manufacturing process of liquid crystal lenses in the prior art, ensuring the imaging effect of the liquid crystal lens.

As shown in FIG. 2, the structure of the TFT in this embodiment is specifically an LTPS type with a top-gate structure. In this embodiment, two adjacent first electrodes 11 are distinguished as an odd electrode 11a and an even electrode 11b, with the TFT located below the odd electrode 11a, and the scanning line 18 and storage capacitor corresponding to the electrode below the even electrode 11b. A common electrode 12a and light-shielding layer 12b of the TFT are formed through common-layer patterning of a first metal layer 13, the scanning lines 18 and a gate 12c of the TFT are formed through common-layer patterning of a second metal layer 14, and a source 12d and drain 12e of the TFT are formed through common-layer patterning of a third metal layer 15; and an overlapping region of the drain 12e and common electrode 12a below the even electrode 11b forms a storage capacitor. In specific practice, first, the first metal layer 13 is patterned on a lower glass substrate 19 and covered with a passivation layer, and polysilicon corresponding to the source 12d and drain 12e below the odd electrode 11a is patterned on this passivation layer; second, a gate insulating layer is coated on the passivation layer to cover the polysilicon, and the second metal layer 14 is patterned on a gate insulating layer; finally, an interlayer dielectric (ILD) is coated on the gate insulating layer, and the third metal layer 15 is patterned on the interlayer dielectric. The source 12d and drain 12e below the odd electrode 11a pass through the interlayer dielectric and gate insulating layer to be in connection with the polysilicon. It should be noted that the light-shielding layer is designed to avoid the impact of incident light on the back of the TFT channel on the normal driving of the TFT, the common electrode serves as one pole of the storage capacitor, and the overlapping portion of the drain and common electrode of the TFT forms the storage capacitor to maintain the potential of the first electrode when the TFT is turned off. In this embodiment, the third metal layer 15, the second metal layer 14, and the first metal layer 13 are sequentially arranged in a direction away from the first electrode 11.

Further, two adjacent first electrodes 11 are respectively embedded on upper and lower surfaces of another passivation layer and are isolated from each other, with an organic planarization layer provided between this passivation layer and the interlayer dielectric. In this embodiment, two adjacent first electrodes 11 are disposed on opposite sides of the passivation layer and arranged alternately, and during actual production, the process alignment deviation between the two adjacent first electrodes can be adjusted to reduce the gap between them, thereby effectively increasing the aperture ratio.

As shown in FIG. 2, the second electrode module 30 of this embodiment is located on a side of the liquid crystal molecules 20 away from the first electrode module 10. The second electrode module 30 includes an upper glass substrate 31 and a second electrode 32 disposed on the side of the upper glass substrate facing the liquid crystal molecules.

FIG. 3 is a structure of the liquid crystal lens at the position marked (2) in FIG. 1. This structure differs from the structure at the position marked (1) in that the TFT is located below the even electrode 11b, and the scanning line 18 and storage capacitor corresponding to the electrode are below the odd electrode 11a.

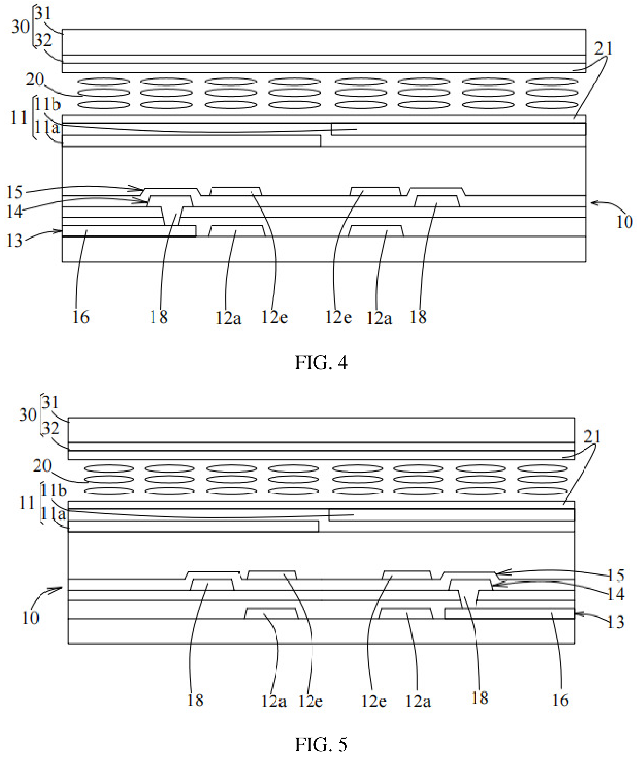

FIG. 4 is a structure of the liquid crystal lens at the position marked (3) in FIG. 1. This structure differs from the structure at the position marked (1) in that: a connection position between the scanning adapter line 16 and the scanning line 18 is located below the odd electrode 11a, and the scanning line 18 and storage capacitor corresponding to the electrode are below the even electrode 11b. The common electrode 12a of the TFT and the scanning adapter line 16 are formed through common-layer patterning of a first metal layer 13, the scanning line 18 is formed through common-layer patterning of a second metal layer 14, and the drain 12e of the TFT is formed through common-layer patterning of a third metal layer 15; and an overlapping region of the drain 12e and common electrode 12a below the even electrode 11b forms a storage capacitor. In this embodiment, the third metal layer 15, the second metal layer 14, and the first metal layer 13 are sequentially arranged in a direction away from the first electrode.

FIG. 5 is a structure of the liquid crystal lens at the position marked (4) in FIG. 1. This structure differs from the structure at the position marked (3) in that: a connection position between the scanning adapter line 16 and the scanning line 18 is located below the even electrode 11b, and the scanning line 18 and storage capacitor corresponding to the electrode are below the odd electrode 11a.

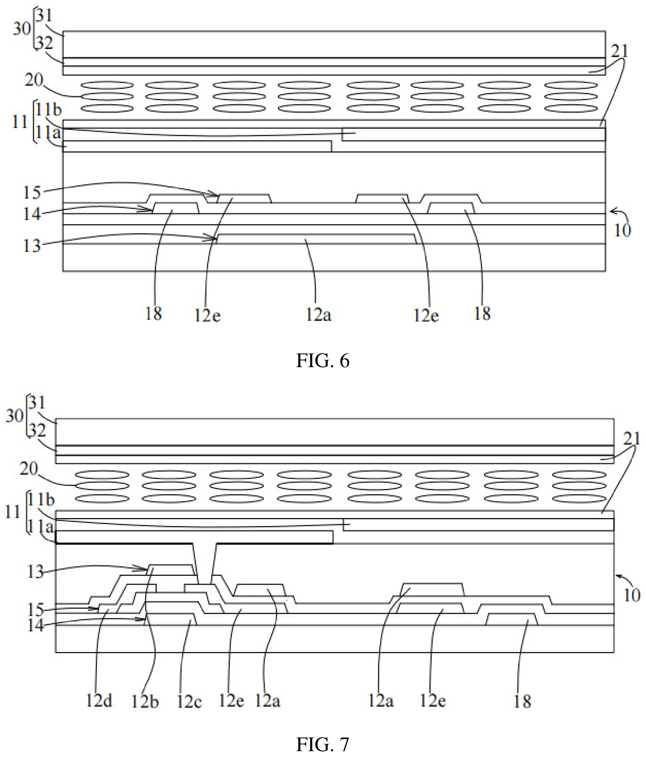

FIG. 6 is a structure of the liquid crystal lens at the position marked (5) in FIG. 1. This structure differs from the structure at the position marked (1) in that: the common electrodes 12a corresponding to adjacent odd electrodes 11a and even electrodes 11b are interconnected in some regions to form a mesh structure, the purpose of which is to reduce the impedance and signal attenuation of the common electrodes; the common electrode 12a is formed through common-layer patterning of a first metal layer 13, the scanning line 18 is formed through common-layer patterning of a second metal layer 14, and the drain 12e of the TFT is formed through common-layer patterning of a third metal layer 15. In this embodiment, the third metal layer 15, the second metal layer 14, and the first metal layer 13 are sequentially arranged in a direction away from the first electrode 11.

### Embodiment 2

This embodiment provides a liquid crystal lens, which differs from Embodiment 1 in that: the structure of the TFT in this embodiment is specifically a bottom-gate structure.

Referring to FIG. 1, FIG. 7 is a structure of the active-driven liquid crystal lens at the position marked (1) in FIG. 1 of this embodiment. This structure differs from the structure of the active-driven liquid crystal lens at the position marked (1) of FIG. 1 in Embodiment 1 in that: the first metal layer 13, the third metal layer 15, and the second metal layer 14 are sequentially arranged in a direction away from the first electrode 11; where the first metal layer 13 is also a layer provided for the scanning adapter line.

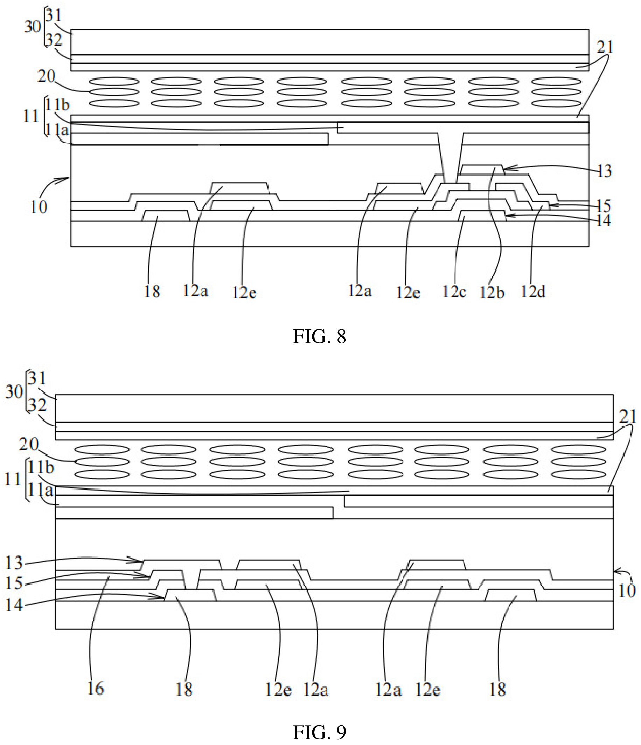

Referring to FIG. 1, FIG. 8 is a structure of the active-driven liquid crystal lens at the position marked (2) in FIG. 1 of this embodiment. This structure differs from the structure of the active-driven liquid crystal lens at the position marked (2) of FIG. 1 in Embodiment 1 in that: the TFT is located below the even electrode 11b. In this embodiment, the first metal layer 13, the third metal layer 15, and the second metal layer 14 are sequentially arranged in a direction away from the first electrode 11.

Referring to FIG. 1, FIG. 9 is a structure of the active-driven liquid crystal lens at the position marked (3) in FIG. 1 of this embodiment. This structure differs from the structure of the active-driven liquid crystal lens at the position marked (3) of FIG. 1 in Embodiment 1 in that: the first metal layer 13, the third metal layer 15, and the second metal layer 14 are sequentially arranged in a direction away from the first electrode 11.

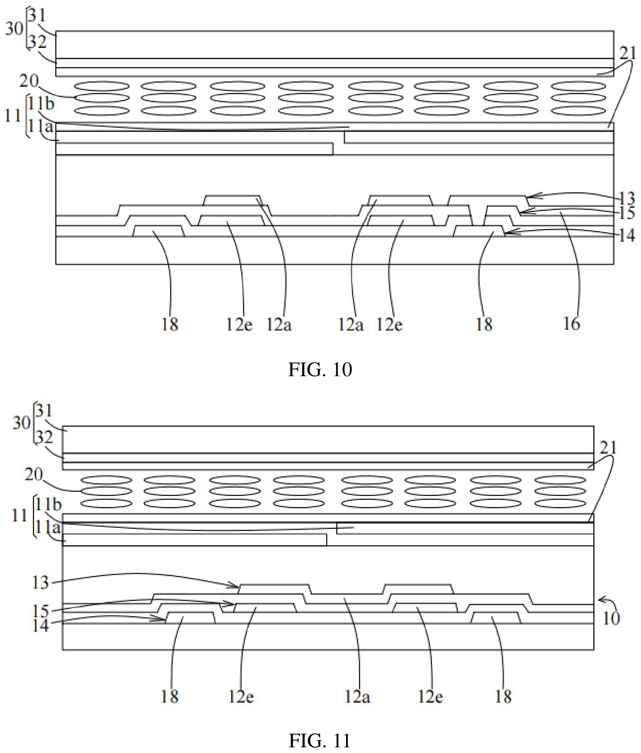

Referring to FIG. 1, FIG. 10 is a structure of the active-driven liquid crystal lens at the position marked (4) in FIG. 1 of this embodiment. This structure differs from the structure of the active-driven liquid crystal lens at the position marked (4) of FIG. 1 in Embodiment 1 in that: the first metal layer 13, the third metal layer 15, and the second metal layer 14 are sequentially arranged in a direction away from the first electrode 11.

Referring to FIG. 1, FIG. 11 a structure of the active-driven liquid crystal lens at the position marked (5) in FIG. 1 of this embodiment. This structure differs from the structure of the active-driven liquid crystal lens at the position marked (5) of FIG. 1 in Embodiment 1 in that: the first metal layer 13, the third metal layer 15, and the second metal layer 14 are sequentially arranged in a direction away from the first electrode 11.

### Embodiment 3

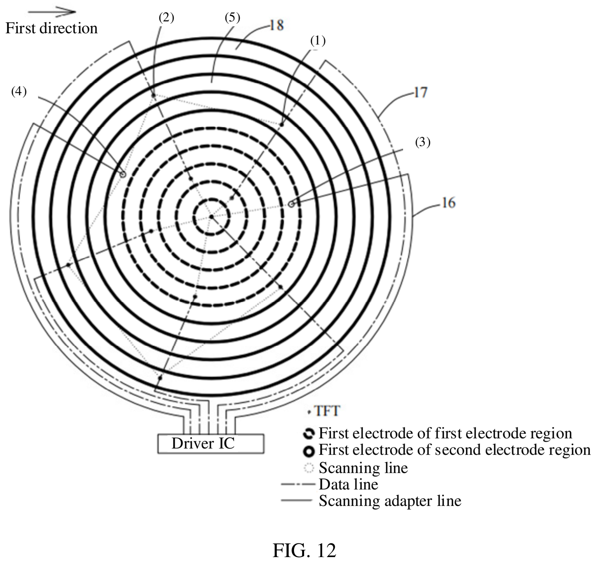

This embodiment provides a liquid crystal lens, which differs from Embodiment 1 in that: as shown in FIG. 12, the scanning lines 18 (as shown by the dotted lines in FIG. 12) within each of the electrode regions of this embodiment are made of opaque materials such as copper, aluminum, or molybdenum, and the scanning lines in this embodiment only need to connect the TFTs of the electrode region, minimizing the routing length of the scanning lines to ensure transmittance and reduce diffracted stray light. Of course, the scanning lines may alternatively be made of a transparent material such as ITO.

The above descriptions are only preferred embodiments of the present invention and are not intended to limit the present invention. Any modifications, equivalent replacements, and improvements made within the spirit and principles of the present invention shall be included within the protection scope of the present invention.

## Claims

1. A liquid crystal lens, comprising:
a first electrode module comprising a first electrode group, a data line group, a scanning line group, and a scanning adapter line group; wherein the first electrode group comprises M electrode regions sequentially nested along a first direction, wherein M ≥ 1, each of the electrode regions comprises N first electrodes of annular structure sequentially nested along the first direction, and scanning lines within each of the electrode regions are configured to connect all TFTs within the electrode region; the data line group comprises the number of data lines consistent with the number of scanning lines in each of the electrode regions, and the first electrodes of the same order in each of the electrode regions are connected to the same data line; and the scanning adapter line group comprises the number of scanning adapter lines consistent with the number of electrode regions, and the scanning adapter lines are respectively connected to the scanning lines in any one of the electrode regions;
liquid crystal molecules; and
a second electrode module, wherein the second electrode module is located on a side of the liquid crystal molecules away from the first electrode module; wherein
the M electrode regions sequentially activate the TFTs of the electrode region through the scanning lines to enable the data lines to output a target voltage to charge storage capacitors corresponding to the first electrodes, and after charging is completed, the TFTs of the electrode region are deactivated through the scanning lines, continuing until the charging of the first electrodes of the last electrode region, thereby completing the writing of one frame signal, enabling the formation of a phase surface in the form of a parabolic or arbitrary freeform surface by writing appropriate signals to the electrodes.

2. The liquid crystal lens according to claim 1, wherein the scanning adapter lines and the data lines are arranged radially.

3. The liquid crystal lens according to claim 1, wherein the scanning lines of each of the electrode regions are formed through common-layer patterning of the same metal layer.

4. The liquid crystal lens according to claim 1, wherein two adjacent first electrodes are respectively embedded on upper and lower surfaces of a passivation layer and are isolated from each other.

5. The liquid crystal lens according to claim 1, wherein the structure of the TFT is specifically one of a top-gate structure or a bottom-gate structure; and two adjacent first electrodes are distinguished as an odd electrode and an even electrode.

6. The liquid crystal lens according to claim 5, wherein the TFT is located below the odd electrode, a common electrode and a light-shielding layer of the TFT are formed through common-layer patterning of a first metal layer, the scanning lines and a gate of the TFT are formed through common-layer patterning of a second metal layer, and a source and a drain of the TFT are formed through common-layer patterning of a third metal layer; when the TFT structure is specifically a top-gate structure, the third metal layer, the second metal layer, and the first metal layer are sequentially arranged in a direction away from the first electrode; and when the TFT structure is specifically a bottom-gate structure, the first metal layer, the third metal layer, and the second metal layer are sequentially arranged in a direction away from the first electrode.

7. The liquid crystal lens according to claim 5, wherein the TFT is located below the even electrode, a common electrode and a light-shielding layer of the TFT are formed through common-layer patterning of a first metal layer, the scanning lines and a gate of the TFT are formed through common-layer patterning of a second metal layer, and a source and a drain of the TFT are formed through common-layer patterning of a third metal layer; when the TFT structure is specifically a top-gate structure, the third metal layer, the second metal layer, and the first metal layer are sequentially arranged in a direction away from the first electrode; and when the TFT structure is specifically a bottom-gate structure, the first metal layer, the third metal layer, and the second metal layer are sequentially arranged in a direction away from the first electrode.

8. The liquid crystal lens according to claim 5, wherein a connection position between the scanning adapter line and the scanning line is located below the odd electrode, a common electrode of the TFT and the scanning adapter line are formed through common-layer patterning of a first metal layer, the scanning lines are formed through common-layer patterning of a second metal layer, and a drain of the TFT is formed through common-layer patterning of a third metal layer; when the TFT structure is specifically a top-gate structure, the third metal layer, the second metal layer, and the first metal layer are sequentially arranged in a direction away from the first electrode; and when the TFT structure is specifically a bottom-gate structure, the first metal layer, the third metal layer, and the second metal layer are sequentially arranged in a direction away from the first electrode.

9. The liquid crystal lens according to claim 5, wherein a connection position between the scanning adapter line and the scanning line is located below the even electrode, a common electrode of the TFT and the scanning adapter line are formed through common-layer patterning of a first metal layer, the scanning line is formed through common-layer patterning of a second metal layer, and a drain of the TFT is formed through common-layer patterning of a third metal layer; when the TFT structure is specifically a top-gate structure, the third metal layer, the second metal layer, and the first metal layer are sequentially arranged in a direction away from the first electrode; and when the TFT structure is specifically a bottom-gate structure, the first metal layer, the third metal layer, and the second metal layer are sequentially arranged in a direction away from the first electrode.

10. The liquid crystal lens according to claim 5, wherein common electrodes corresponding to adjacent odd electrodes and even electrodes are interconnected in some regions to form a mesh structure, the common electrodes are formed through common-layer patterning of a first metal layer, the scanning lines are formed through common-layer patterning of a second metal layer, and a drain of the TFT is formed through common-layer patterning of a third metal layer; when the TFT structure is specifically a top-gate structure, the third metal layer, the second metal layer, and the first metal layer are sequentially arranged in a direction away from the first electrode; and when the TFT structure is specifically a bottom-gate structure, the first metal layer, the third metal layer, and the second metal layer are sequentially arranged in a direction away from the first electrode.
